# EUROPEAN PATENT APPLICATION

(11) **EP 4 670 828 A1**
(43) Date of publication of application: **31.12.2025**
(21) Application number: 24760269.1
(22) Date of filing: 16.02.2024
(51) Int. Cl.: B01D 63/02, B01D 63/00, F16J 15/10, F16J 15/14

(54) **HOLLOW FIBER MEMBRANE MODULE**

(30) Priority: 21.02.2023 JP 2023025288
(71) Applicant: NOK Corporation, Minato-ku, Tokyo 105-8585 (JP)
(72) Inventor: ITO, Yosuke, Kikugawa-shi, Shizuoka 437-1507 (JP)
(74) Representative: Global IP Europe Patentanwaltskanzlei
(86) International application number: PCT/JP2024/005529
(87) International publication number: WO 2024/176970

(57) **Abstract**

A hollow fiber membrane module capable of suppressing a load on a hollow fiber membrane is provided. A hollow fiber membrane module 10 including a plurality of hollow fiber membranes 220, a case 100, in an accommodation interior of which the plurality of hollow fiber membranes 220 are accommodated, the accommodation interior being open at both ends, and a pair of sealing and fixing portions 231 and 232 that seal gaps among the plurality of hollow fiber membranes 220 in a state where each of hollow interiors of the plurality of hollow fiber membranes 220 is open on each of one end side and the other end side of the case 100, wherein the hollow fiber membrane module 10 further including a holding member 210 provided in the case 100 and configured to hold the plurality of hollow fiber membranes 220, and the plurality of hollow fiber membranes 220 are fixed to the holding member 210 by the pair of sealing and fixing portions 231 and 232.

## Description

### [Technical Field]

The present invention relates to a hollow fiber membrane module.

### [Background Art]

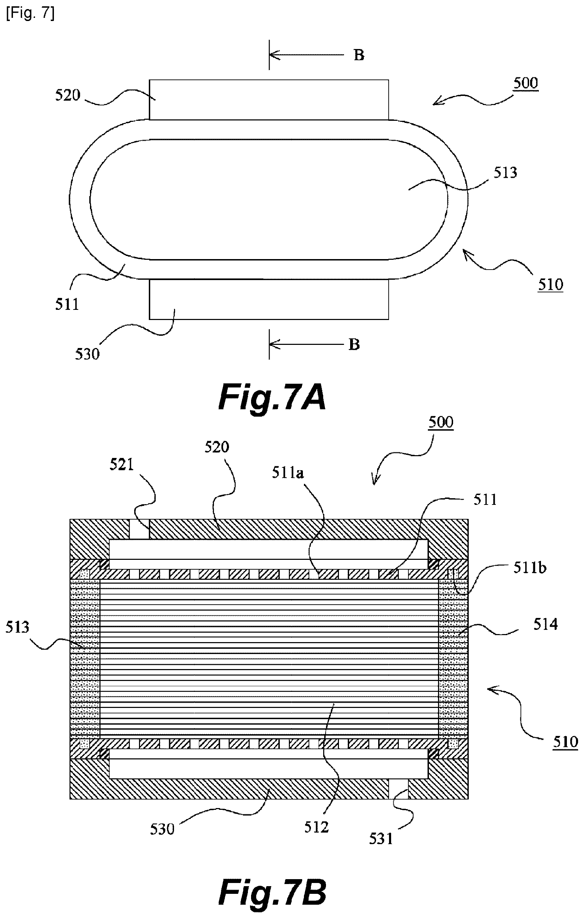

In a humidifier that is used in a fuel cell for a car, a hollow fiber membrane module is provided. In such a device, there is an increasing demand for a high-output system, and the hollow fiber membrane module tends to become larger. A hollow fiber membrane module according to a related art will be described with reference to Fig. 7. Fig. 7 is a schematic view illustrating a configuration of the hollow fiber membrane module according to the related art. Fig. 7A is a front view of the hollow fiber membrane module and Fig. 7B is a cross-sectional view along BB in Fig. 7A.

A hollow fiber membrane module 500 according to the related art includes a hollow fiber membrane module main body 510 and a pair of cover members 520 and 530 that are mounted on the hollow fiber membrane module main body 510. The hollow fiber membrane module main body 510 includes a case 511 and a plurality of hollow fiber membranes 512 that are accommodated in the case 511. The case 511 has an accommodation interior that is open at both ends thereof, and the plurality of hollow fiber membranes 512 are accommodated in this accommodation interior. In the pair of cover members 520 and 530, openings 521 and 531 that serve as an inlet and an outlet for a fluid are provided, respectively. In addition, a plurality of through holes 511a for making the inner spaces of the cover members 520 and 530 communicate with the accommodation interior of the case 511 are provided in the case 511.

The hollow fiber membrane module main body 510 is provided with a pair of sealing and fixing portions 513 and 514 that seal gaps among the plurality of hollow fiber membranes 512 in a state where the hollow interior of each of the plurality of hollow fiber membranes 512 is open are provided on one end side and the other end side of the case 511. An annular gap between the inner circumferential surface of the case 511 and the pair of sealing and fixing portions 513 and 514 is sealed with a liquid-form gasket.

In the hollow fiber membrane module 500 configured as described above, for example, a wet gas is made to flow from the opening 521 to the opening 531 so as to pass through the exteriors of the plurality of hollow fiber membranes 512, and a dry gas is made to flow from the sealing and fixing portion 514 side to the sealing and fixing portion 513 side so as to pass through each of the hollow interiors of the plurality of hollow fiber membranes 512, whereby the dry gas is humidified, and the wet gas is dehumidified.

As described above, along with an increase in the size of the hollow fiber membrane module, the flow rate of a fluid also increases, the pressure-receiving area of the hollow fiber membrane module also becomes wide, and the received pressure is also increasing. Therefore, in the related art, the hollow fiber membrane module is configured such that annular grooves 511b are provided on the inner circumferential surface of the case 511 so that annular protrusions on the outer circumference of the pair of sealing and fixing portions 513 and 514 are caught in the annular grooves, which prevents the positions of the pair of sealing and fixing portions 513 and 514 from being displaced with respect to the case 511. The resin case 511 can be molded with a mold. However, it is difficult to provide the annular grooves 511b by molding with a mold if the case 511 is large. Hence the annular grooves 511b are formed by a cutting process or the like after resin molding. In addition, in the structure of the related art, each of the pair of sealing and fixing portions 513 and 514 may move independently in a direction parallel to the hollow fiber membranes 512. In this case, the hollow fiber membranes 512 may be pulled or crushed, a load may be thus likely to increase, and there is a concern that the hollow fiber membranes may be damaged.

### [Citation List]

### [Patent Literature]

[PTL 1] Japanese Patent Application Publication No. 2015-181986

### [Summary of Invention]

### [Technical Problem]

The present invention provides a hollow fiber membrane module capable of suppressing a load on a hollow fiber membrane.

### [Solution to Problem]

The present invention adopted the following means to solve the above-described problem.

The present invention is a hollow fiber membrane module including:
a plurality of hollow fiber membranes;
a case, in an accommodation interior of which the plurality of hollow fiber membranes are accommodated, the accommodation interior being open at both ends, and
a pair of sealing and fixing portions that seal gaps among the plurality of hollow fiber membranes in a state where each of hollow interiors of the plurality of hollow fiber membranes is open on each of one end side and the other end side of the case,
wherein the hollow fiber membrane module further comprises a holding member provided in the case and configured to hold the plurality of hollow fiber membranes, and
wherein the plurality of hollow fiber membranes are fixed to the holding member by the pair of sealing and fixing portions.

According to the present invention, since the pair of sealing and fixing portions are fixed to the holding member, each of the pair of sealing and fixing portions is prevented from moving independently. Therefore, the hollow fiber membranes are prevented from being pulled or crushed.

An annular gap between the pair of sealing and fixing portions and the case may be sealed with an elastic seal portion.

The holding member may include:
a pair of plate-shaped portions provided to sandwich the plurality of hollow fiber membranes; and
a connection portion connecting the pair of plate-shaped portions.

The pair of plate-shaped portions may be provided with a plurality of through holes that serve as passages for a fluid passing through exteriors of the plurality of hollow fiber membranes.

### [Advantageous Effects of Invention]

As described above, according to the present invention, it is possible to suppress a load on a hollow fiber member.

### [Brief Description of Drawings]

[Fig. 1]

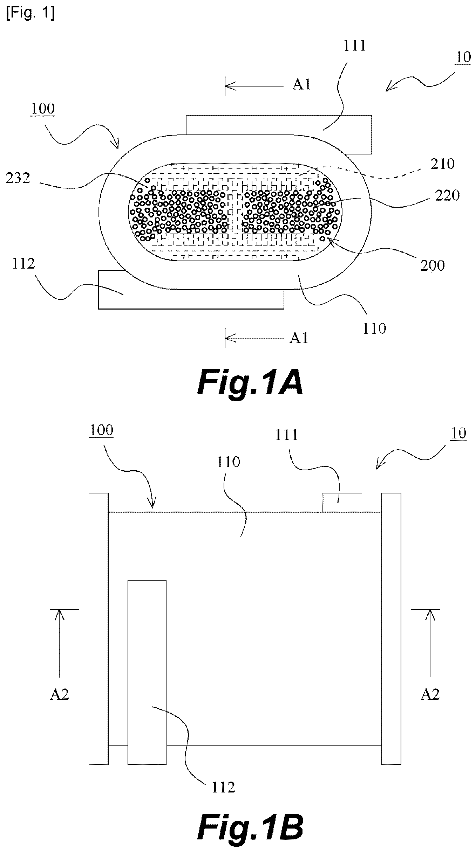

   Fig. 1 is a schematic view illustrating a configuration of a hollow fiber membrane module according to an embodiment of the present invention.
[Fig. 2]

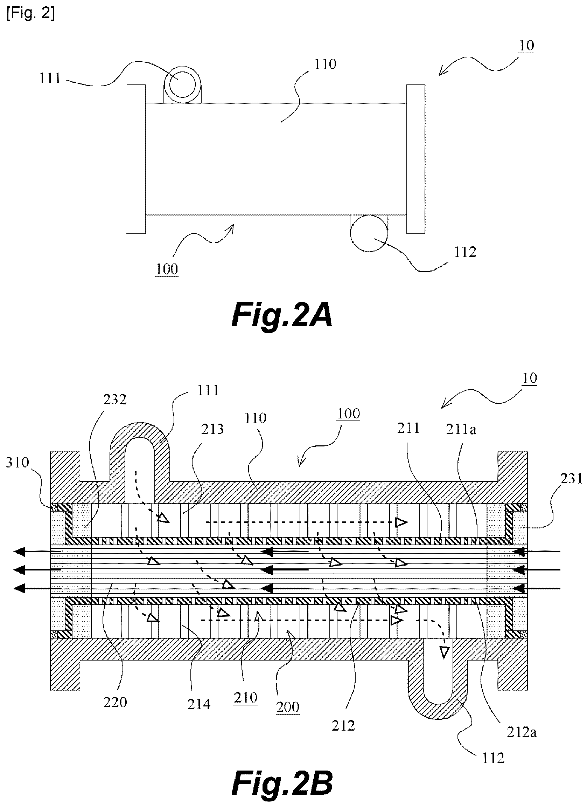

   Fig. 2 is a schematic view illustrating a configuration of the hollow fiber membrane module according to the embodiment of the present invention.
[Fig. 3]

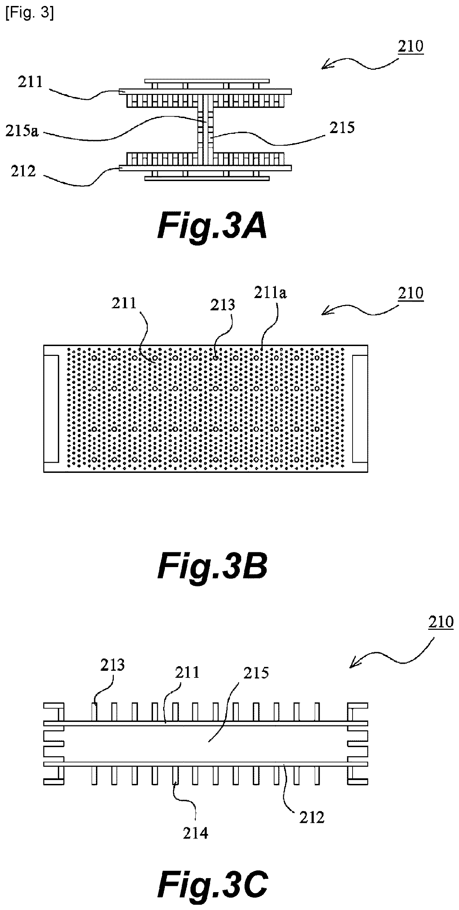

   Fig. 3 is a schematic view illustrating a configuration of a holding member according to the embodiment of the present invention.
[Fig. 4]

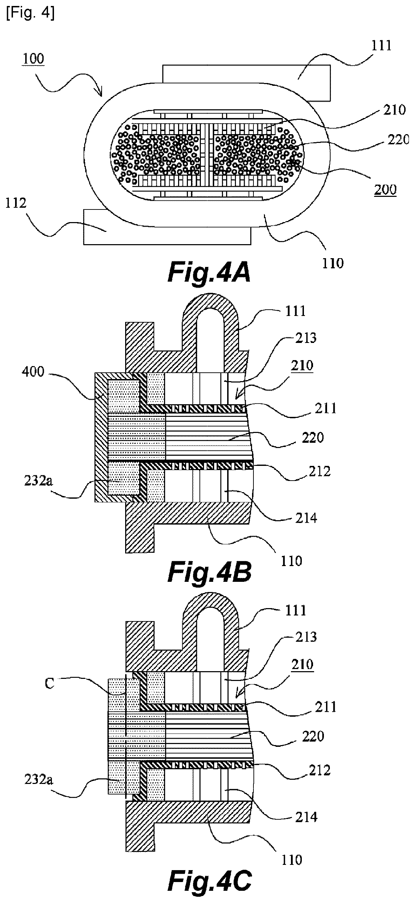

   Fig. 4 is a view illustrating manufacturing steps of the hollow fiber membrane module according to the embodiment of the present invention.
[Fig. 5]

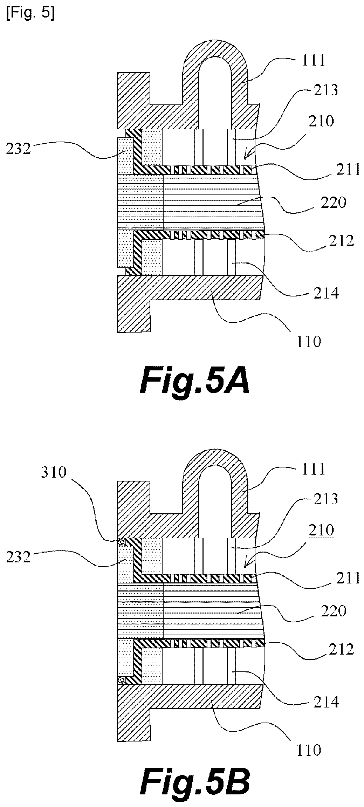

   Fig. 5 is a view illustrating manufacturing steps of the hollow fiber membrane module according to the embodiment of the present invention.
[Fig. 6]

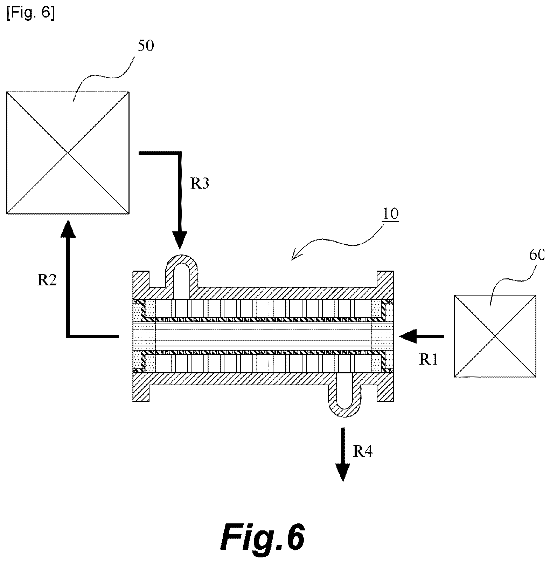

   Fig. 6 is a schematic view illustrating a configuration of an application example of the hollow fiber membrane module according to the embodiment of the present invention.
[Fig. 7]
   Fig. 7 is a schematic view illustrating a configuration of a hollow fiber membrane module according to the related art.

### [Description of Embodiments]

Hereinafter, an embodiment of this invention will be described in detail illustratively based on an example with reference to the drawings. However, the dimensions, materials, shapes, relative dispositions, and the like of components that are described in this embodiment are not intended to limit the scope of this invention only thereto unless particularly specifically described.

### (Embodiment)

A hollow fiber membrane module according to an embodiment of the present invention will be described with reference to Figs. 1 to 5. Fig. 1 is a schematic view illustrating a configuration of the hollow fiber membrane module according to the embodiment of the present invention. Fig. 1A is a front view of the hollow fiber membrane module, and Fig. 1B is a plan view of the hollow fiber membrane module. Fig. 2 is a schematic view illustrating a configuration of the hollow fiber membrane module according to the embodiment of the present invention. Fig. 2A is a side view of the hollow fiber membrane module, and Fig. 2B is a cross-sectional view along A1-A1 in Fig. 1A (a cross-sectional view along A2-A2 in Fig. 1B). Fig. 3 is a schematic view illustrating a configuration of a holding member according to the embodiment of the present invention. Fig. 3A is a front view of the holding member, Fig. 3B is a plan view of the holding member, and Fig. 3C is a side view of the holding member. Figs. 4 and 5 are views illustrating manufacturing steps of the hollow fiber membrane module according to the embodiment of the present invention. Fig. 4A is a front view of an intermediate product during manufacturing steps, and Figs. 4B and 4C and Fig. 5 are parts of cross-sectional views of the intermediate product during the manufacturing steps (corresponding to the cross-sectional view along A1-A1 in Fig. 1A (the cross-sectional view along A2-A2 in Fig. 1B)).

### <Hollow fiber membrane module>

A hollow fiber membrane module 10 according to the present embodiment includes a case 100 and a hollow fiber membrane unit 200 that is accommodated in the case 100. The case 100 can be made of a high rigidity resin material or the like. The case 100 includes a tubular case main body 110 and a pair of pipes 111 and 112 that are integrally provided on the case main body 110. The case main body 110 is open at both ends, and an inside thereof serves as an accommodation interior for accommodating a plurality of hollow fiber membranes 220. The case main body 110 according to the present embodiment has a pair of flat plate-shaped portions and a pair of curved portions that connect both sides of the flat plate-shaped portions, respectively. The case main body 110 has an oval shape when seen from the front. The pair of pipes 111 and 112 connect the outside of the case 100 to the inside of the case main body 110 and form a passage for a liquid that flows through the exteriors of the plurality of hollow fiber membranes 220. The pair of pipes 111 and 112 are provided on outer walls of the pair of flat plate-shaped portions in the case main body 110, respectively.

The hollow fiber membrane unit 200 includes a holding member 210, the plurality of hollow fiber membranes 220 that are held in the holding member 210, and a pair of sealing and fixing portions 231 and 232. The pair of sealing and fixing portions 231 and 232 are configured to seal gaps among the plurality of hollow fiber membranes 220 in a state where each of hollow interiors of the plurality of hollow fiber membranes 220 is open on one end side and the other end side of the case 100. As the material of the hollow fiber membrane 220, polyphenylsulfone (PPSU) can be suitably used, and as the material of the sealing and fixing portions 231 and 232, an epoxy resin can be suitably used.

The holding member 210 can be made of a resin material. The holding member 210 includes a pair of plate-shaped portions 211 and 212 that are provided to sandwich the plurality of hollow fiber membranes 220 and a connection portion 215 that connects the pair of plate-shaped portions 211 and 212. The pair of plate-shaped portions 211 and 212 are provided with a plurality of through holes 211a and 212a that serve as passages for a fluid passing through the exteriors of the plurality of hollow fiber membranes 220. The pair of plate-shaped portions 211 and 212 are configured to face the pair of flat plate-shaped portions in the case main body 110, respectively, when the holding member 210 is installed in the inside of the case (in the inside of the case main body 110). The pair of plate-shaped portions 211 and 212 form a passage for a fluid passing through the exteriors of the plurality of hollow fiber membranes 220 between inner circumferential surfaces (inner circumferential surfaces of the pair of the plate-shaped portions) of the case 100 (the case main body 110) and the plurality of hollow fiber membranes 220. This passage allows a fluid to flow in all over the plurality of hollow fiber membranes 220 that are accommodated between the pair of plate-shaped portions 211 and 212. Each of the pair of plate-shaped portions 211 and 212 is provided with a plurality of pin-shaped support portions 213 and 214. The plurality of support portions 213 and 214 abut on the pair of flat plate-shaped portions in the case main body 110, whereby deformation of the pair of plate-shaped portions 211 and 212 is prevented. In addition, gaps between the pair of flat plate-shaped portions of the case main body 110 and the pair of plate-shaped portions 211 and 212 are stably secured.

### <Method for manufacturing hollow fiber membrane module>

A method for manufacturing the hollow fiber membrane module 10 will be described in the order of manufacturing steps. First, the holding member 210 is inserted into the accommodation interior of the case 100 (the case main body 110). In addition, the plurality of hollow fiber membranes 220 are loaded into each of both sides of the connection portion 215 between the pair of plate-shaped portions 211 and 212 of the holding member 210. Fig. 4A shows a state where the plurality of hollow fiber membranes 220 have been loaded. Next, the sealing and fixing portions 231 and 232 are formed. Figs. 4 and 5 show a process for forming the sealing and fixing portion 232, which is also applicable to the sealing and fixing portion 231.

First, a jig 400 for loading a liquid-form potting material, such as an epoxy resin, is mounted at an end of the case main body 110. A liquid-form potting material 232a is loaded in this state (refer to Fig. 4B). The liquid-form potting material 232a may be injected from an injection port provided in the jig 400 or may be injected via a tube or the like that is passed through the pipe 111. In addition, liquid level of the potting material 232a can be maintained at a predetermined position by causing a centrifugal force or the like to act thereon while the liquid-form potting material 232a is injected and the potting material 232a cures.

After the potting material 232a cures, the jig 400 is removed (refer to Fig. 4C). In addition, a part of the cured potting material 232a is cut together with a part of the leading ends of the plurality of hollow fiber membranes 220. A dash-dot line C in Fig. 4C indicates the cut plane. As a result, the sealing and fixing portion 232 is formed such that each of the hollow interiors of the plurality of hollow fiber membranes 220 is open and the gaps among the plurality of hollow fiber membranes 220 are sealed (refer to Fig. 5A). In the present embodiment, the holding member 210 is configured to have complicated structures at both end portions. This makes the sealing and fixing portion 232 caught in the end portion of the holding member 210 even when a force acts on the cured sealing and fixing portion 232 in a variety of directions. For example, as shown in Fig. 5A, a part of the sealing and fixing portion 232 is present on each of the end surface side and the interior side of the case 100 with respect to portions of the end of the holding member 210 that extend in the vertical direction in the drawing. Therefore, the sealing and fixing portion 232 is not displaced in the horizontal direction in the drawing with respect to the holding member 210. Therefore, the sealing and fixing portion 232 does not come off from the holding member 210.

After the sealing and fixing portion 232 is formed, an adhesive portion between the case main body 110 and the sealing and fixing portion 232 is peeled off. The adhesive portion between the case main body 110 and the sealing and fixing portion 232 can be peeled off by, for example, putting the intermediate product in which the sealing and fixing portion 232 has been provided into a constant temperature bath and heating the intermediate product for a predetermined time. After that, a liquid-form gasket 310, such as a silicon adhesive, is injected into an annular gap between the case main body 110 and the sealing and fixing portion 232 (refer to Fig. 5B). The annular gap between the case main body 110 and the sealing and fixing portion 232 is sealed by curing of the liquid-form gasket 310. That is, the annular gap between the sealing and fixing portion 232 and the case 100 (the case main body 110) is sealed with the cured liquid-form gasket 310 (an elastic seal portion).

Here, the reason for sealing the annular gap between the case main body 110 and the sealing and fixing portion 232 with the liquid-form gasket 310 after the adhesive portion therebetween is peeled off will be briefly described. Since the case main body 110 and the sealing and fixing portion 232 have different linear expansion coefficients, a force that tears off the case main body 110 and the sealing and fixing portion 232 is generated depending on the ambient temperature. Therefore, there is a concern that the adhesive portion between the case main body 110 and the sealing and fixing portion 232 may peel off over time. Particularly, if the hollow fiber membrane module 10 is large, the difference in linear expansion coefficient is not negligible. Therefore, in the present embodiment, the adhesive portion between the case main body 110 and the sealing and fixing portion 232 is torn off and the annular gap therebetween is sealed with the liquid-form gasket 310 that is elastically deformable even after curing.

### <Application example of hollow fiber membrane module>

An application example of the hollow fiber membrane module 10 according to the present embodiment will be described. The hollow fiber membrane module 10 according to the present embodiment can be applied as a humidifier or a dehumidifier. This will be briefly described.

The hollow fiber membrane module 10 includes a membrane interior passage that passes through the interiors of the plurality of hollow fiber membranes 220 and a membrane exterior passage that passes through the exteriors of the plurality of hollow fiber membranes 220. For example, the membrane interior passage is configured such that a dry gas flows from one end side of the case 100 to the other end side of the case 100 through the hollow interiors of the plurality of hollow fiber membranes 220 (refer to solid arrows in Fig. 2B). In addition, for example, the membrane exterior passage is configured such that a wet gas having a higher humidity than the dry gas flows from the pipe 111 to the pipe 112 through the accommodation interior of the case 100 (refer to dotted arrows in Fig. 2B).

Note that, while not shown, lids including an inlet and an outlet for letting a fluid flow into the membrane interior passage may be mounted at both ends of the case 100. The movement of the hollow fiber membrane unit 200 with respect to the case 100 can be more reliably prevented by the lids.

The above-described configurations allow moisture in the wet gas to move into the dry gas by a membrane separation action of the hollow fiber membranes. That is, the dry gas is humidified and the wet gas is dehumidified. Thus, the hollow fiber membrane module can be used as a humidifier and as a dehumidifier.

The hollow fiber membrane module 10 according to the present embodiment can be suitably used as a humidifier for humidifying an electrolyte membrane provided in a fuel cell 50. A configuration where the hollow fiber membrane module 10 is used as such a humidifier will be described with reference to Fig. 6. As shown in the drawing, a dry air is supplied to the membrane interior passage of the hollow fiber membrane module 10 by a compressor 60 (refer to an arrow R1). The dry air that flows in the membrane interior passage is humidified as described above and discharged from the hollow fiber membrane module 10. This humidified wet air is supplied to the fuel cell 50 (refer to an arrow R2). Therefore, the electrolyte membrane provided in the fuel cell 50 is maintained in a wet state. In addition, a wet air generated in the fuel cell 50 is supplied to the membrane exterior passage of the hollow fiber membrane module 10 (refer to an arrow R3) and dehumidified by a membrane separation action of the hollow fiber membranes, and a dry gas is discharged from the hollow fiber membrane module 10 (refer to an arrow R4). The temperature of the wet air generated in the fuel cell 50 is high and the temperature of the dry air supplied from the compressor 60 is low, thus the temperature of the wet air discharged from the hollow fiber membrane module 10 becomes low. Therefore, the hollow fiber membrane module 10 exhibits a heat exchange function.

### <Advantages of hollow fiber membrane module according to the present embodiment>

According to the hollow fiber membrane module 10 according to the present embodiment, since the pair of sealing and fixing portions 231 and 232 are fixed to the holding member 210, each of the pair of sealing and fixing portions 231 and 232 is prevented from moving independently. Therefore, the hollow fiber membranes 220 is prevented from being pulled or crushed. Thus, a load on the hollow fiber membranes 220 is suppressed, whereby it is possible to suppress breakage of the hollow fiber membranes 220.

In addition, the present embodiment does not adopt a configuration in which an annular groove or the like is provided on an inner circumferential surface of a case main body in order to hook a part of a sealing and fixing portion. Therefore, a cutting process or the like on the case main body is not necessary, and thus manufacturing is easy.

### (Others)

The holding member 210 may be provided with a cavity portion 215a in the connection portion 215 to connect a passage between the plate-shaped portion 211 and the case main body 110 to a passage between the plate-shaped portion 212 and the case main body 110. In this configuration, a passage is formed that directly reaches the pipe 112 from the pipe 111 without passing through a region where the plurality of hollow fiber membranes 220 are loaded. This can suppress a pressure loss in a flow of a wet gas from the pipe 111 to the pipe 112, for example, and thus suppress the load on the hollow fiber membranes 220. Note that the cavity portion 215a may not be provided depending on a usage condition. In the above-described embodiment, the hollow fiber membrane module 10 is used as a humidifier or a dehumidifier. However, the hollow fiber membrane module of the present invention can also be applied to other uses, such as a filtration device (for example, a device that performs cross flow filtration).

### [Reference Signs List]

- 10: Hollow fiber membrane module
- 100: Case
- 110: Case main body
- 111, 112: Pipe
- 200: Hollow fiber membrane unit
- 210: Holding member
- 211, 212: Plate-shaped portion
- 211a, 212a: Through hole
- 213, 214: Support portion
- 215: Connection portion
- 215a: Cavity portion
- 220: Hollow fiber membrane
- 231, 232: Sealing and fixing portion
- 232a: Potting material
- 310: Liquid-form gasket
- 400: Jig

## Claims

1. A hollow fiber membrane module comprising:
a plurality of hollow fiber membranes;
a case, in an accommodation interior of which the plurality of hollow fiber membranes are accommodated, the accommodation interior being open at both ends; and
a pair of sealing and fixing portions that seal gaps among the plurality of hollow fiber membranes in a state where each of hollow interiors of the plurality of hollow fiber membranes is open on each of one end side and the other end side of the case,
wherein the hollow fiber membrane module further comprises a holding member provided in the case and configured to hold the plurality of hollow fiber membranes, and
wherein the plurality of hollow fiber membranes are fixed to the holding member by the pair of sealing and fixing portions.

2. The hollow fiber membrane module according to claim 1, wherein an annular gap between the pair of sealing and fixing portions and the case is sealed with an elastic seal portion.

3. The hollow fiber membrane module according to claim 1 or 2, wherein the holding member includes:
a pair of plate-shaped portions provided to sandwich the plurality of hollow fiber membranes; and
a connection portion connecting the pair of plate-shaped portions.

4. The hollow fiber membrane module according to claim 3, wherein the pair of plate-shaped portions is provided with a plurality of through holes that serve as passages for a fluid passing through exteriors of the plurality of hollow fiber membranes.
